# EUROPEAN PATENT APPLICATION

(11) **EP 2 124 089 A1**
(43) Date of publication of application: **25.11.2009**
(21) Application number: 07720980.7
(22) Date of filing: 26.04.2007
(51) Int. Cl.: G02C 7/10, G02C 7/12, B32B 23/04, B32B 7/10

(54) **AN OPTICAL FILM USED AS A LENS**

(30) Priority: 14.03.2007 CN 200710008703
(71) Applicant: Actif Polarizers (xiamen) Ltd., Xinglin Ind. Park Xiamen Fujian 361022 (CN)
(72) Inventor: WU, Jinjia, Fujian 361022 (CN)
(74) Representative: Chaillot, Geneviève
(86) International application number: PCT/CN2007/001407
(87) International publication number: WO 2008/110045

(57) **Abstract**

An optical film lens product comprises at least one plastics layer and one discoloration layer. The discoloration layer stays close between the two plastics layers. A polarization layer, a UV absorption stuff layer, or a dye layer may further stay close between the two plastics layers, or the three layers may be randomly assembled. The discoloration layer stays close and sandwiched between the two plastics layers, which is however not immersed in the current art to wrap the plastics layer for prevention of dye from being uneven and for prevention of the discoloration layer from being shed. Further, after being formed, the discoloration layer stays close to the plastics layer, so the time of color change is easily controlled and the color cannot slowly change.

## Description

### BACKGROUND OF THE INVENTION

### 1. Field of the Invention

This invention relates to an optical product and particularly to an optical film lens product.

### 2. Description of Related Art

A lens for glasses is a typical product, and in such a field, manufacturers always strive to improve the product's capability, for example, in color change, polarization, and anti-UV, and design it for various colors. The characteristics are achieved after relevant layers are added. However, the art is certainly tough in design and process and its cost is higher; further, the capability might weaken and even die away if the lens is scratched or worn for a long time.

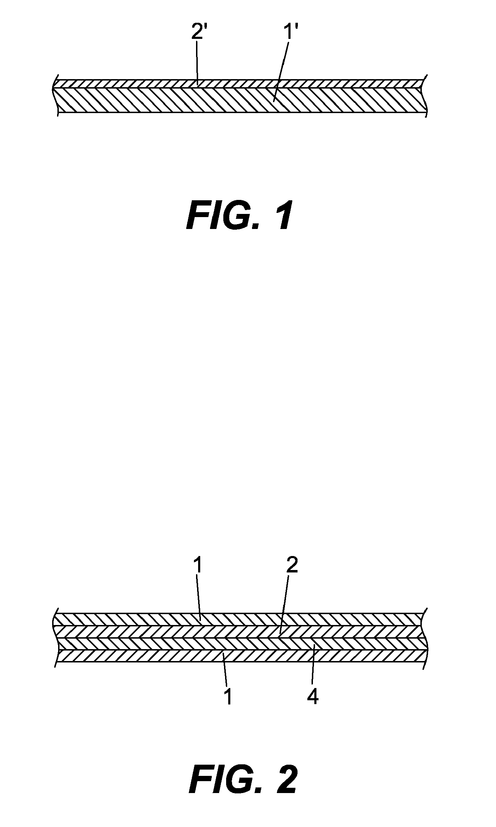

Later, some manufacturers applies a discoloration dye to the surface of a plastic lens (TAC layer); for example, in U.S.Pat.No.5,130,353 or U.S.Pat.No.5,185,390, a TAC layer 1' is directly immersed into the discoloration dye or another chemical compound causing discoloration so that a discoloration layer 2' may be coated on the surface of plastic lens, as shown in figure 1, and then it permeates into the lens after being heated. However, in the art of wrapping the TAC layer 1' with the discoloration layer 2', due to chromomele that is unevenly thick, the dyeing is uneven; if the pair of glasses is required for a constant coloration, the absorption of dye must be controlled, and further it is more difficult to operate and the cost is higher. Besides, the time difference of discoloration is not achieved and the discoloration is slow.

Next, a general lens must be capable of guarding against UV and some lenses must further have the capability of polarization. Here, the stuff or polarization layer absorbing the UV stays close to the surface of plastic layer, and the layer is likewise shed easily.

Consequently, because of the technical defects of described above, the applicant keeps on carving unflaggingly through wholehearted experience and research to develop the present invention, which can effectively improve the defects described above.

### SUMMARY OF THE INVENTION

This invention is mainly to provide an optical film lens product preventing the dye from being uneven and discolored, and easily controlling the time of color change.

In order to achieve the object, the following approach of technology is applied.

An optical film lens product comprises at least a plastics layer, discoloration layer, and a UV absorption stuff layer. The discoloration layer and the UV absorption stuff layer stay close between at least two plastics layers.

Between the two plastics layers, a polarization layer and/or a dye layer stays close.

The plastics layer is a TAC layer, a DAC layer, or an AC layer.

The discoloration layer is made from PET, PC, or TAC.

In the manner, the discoloration layer stays close and sandwiched between the two plastics layers, which is however not immersed in the current art to wrap the plastics layer for prevention of dye from being uneven and for prevention of the discoloration layer from being shed. Further, after being formed, the discoloration layer stays close to the plastics layer, so the time of color change is easily controlled and the color cannot slowly change. Next, in this invention, the UV absorption stuff layer is made to stay close between the two plastics layer so as to be protected from deviation.

### BRIEF DESCRIPTION OF THE DRAWINGS

Fig. 1 is a schematic view illustrating the structure of a conventional optical film lens product;
Fig. 2 is a schematic view illustrating a structure in a first embodiment of this invention;
Fig. 3 is a schematic view illustrating the structure in a second embodiment of this invention; and
Fig. 4 is a schematic view illustrating a structure in a third embodiment of this invention.

### DETAILED DESCRIPTION OF THE PREFERRED EMBODIMENTS

Now, the present invention will be described more specifically with reference to the following embodiments. It is to be noted that the following descriptions of preferred embodiments of this invention are presented herein for purpose of illustration and description only; it is not intended to be exhaustive or to be limited to the precise form disclosed.

With reference to figure 2 illustrating an optical film lens product in a first embodiment of this invention, a discoloration layer 2 and a UV absorption stuff layer 4 stay close between two TAC (Tri-acetate Cellulose) layers. The discoloration layer 2 and the UV absorption stuff layer 4 are film structures formed beforehand. In this invention, the art of immersion is not applied, so uneven dyeing may be prevented. The discoloration layer 2 and the UV absorption stuff layer 4 are sandwiched between the two TAC layers 1 so as to be protected from discoloration. Further, the independently formed discoloration layer may well control the time of color change.

With reference to figure 2 illustrating a second embodiment, similarly, the TAC layer 1 firstly stays close to the discoloration layer 2. In order to make an optical product to be capable of polarization, a polarization layer 3 may be further applied between the two TAC layers 1; in order to make the optical product to be capable of anti-UV, a UV absorption stuff layer 4 may be added between the two TAC layers 1 and a TAC layer 1 further stays close. Likewise, in the embodiment, the discoloration layer 2 is sandwiched between the two TAC layers 1 and the polarization layer 3 and the UV absorption stuff layer 4 are added between the layers 1. Thus, likewise the uneven dyeing and the decoloration may be prevented and the time of color change may be easily controlled.

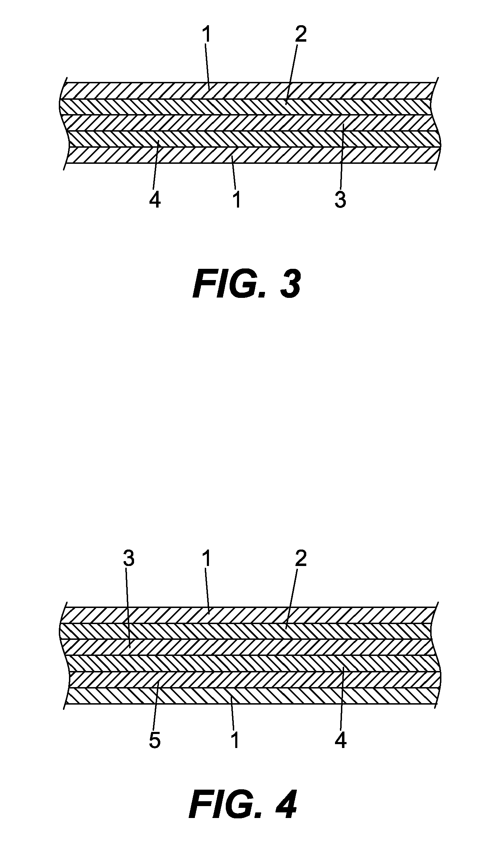

With reference to figure 4 illustrating a third embodiment that is different from the second embodiment, a dye layer 5 further stays close to the TAC layer 1 so that the colors of optical product may be different.

What we especially explain is the TAC layer that is the plastics layer and is not limited to one material of TAC but includes another material, such as a DAC (Diacetate Cellulose) layer or an AC layer. Besides, the discoloration layer may also be made from a random material, such as PET, PC, TAC or the like, in which the TAC is the best. Here, emphatically, although both the plastics layer and the discoloration layer may made from the TAC, the two layers are differently processed, in which the plastics layer is transparent and reinforced and not worn and the discoloration layer is poor in wear resistance so that the surface of layer is easily scratched and sheds off.

Further, the polarization layer, the UV absorption stuff layer, and the dye layer are characteristic layers of which some functions may be achieved. The layers and the discoloration layer may be randomly combined and arranged in proper order, and even manufacturers may add some other characteristic layers depending on their requests. Next, the TAC layer (the plastics layer) is not either limited to the two layers but 3 layers or more layers, and the rest of TAC layers and the characteristic layers may be randomly arranged and assembled as long as the two TAC layers are surely formed in an outer-most layer.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. An optical film lens product, comprising a plastics layer, a discoloration layer, and a UV absorption stuff layer, wherein the discoloration layer and the UV absorption stuff layer stay close between at least two plastics layers.

2. The optical film lens product according to claim 1, wherein a polarization layer and/or a dye layer stays close between the two plastics layers.

3. The optical film lens product according to claim 1 or 2, wherein the plastics layer is a TAC layer, a DAC layer, or an AC layer.

4. The optical film lens product according to claim 1 or 2, wherein the discoloration layer is a PET layer, a PC layer, or a TAC layer.
